(19) Europäisches Patentamt
European Patent Office
Office européen des brevets

(11) Veröffentlichungsnummer: **0 198 223**
**A1**

# (12) EUROPÄISCHE PATENTANMELDUNG

(21) Anmeldenummer: 86103361.1

(22) Anmeldetag: 13.03.86

(51) Int. Cl.4: **B23Q 5/14** , B23Q 5/38 , B23Q 5/56

(30) Priorität: 01.04.85 DE 3511933

(43) Veröffentlichungstag der Anmeldung:
22.10.86 Patentblatt 86/43

(84) Benannte Vertragsstaaten:
CH DE FR IT LI

(71) Anmelder: MAHO WERKZEUGMASCHINENBAU BABEL & CO.
Postfach 1280
D-8962 Pfronten/Allgäu(DE)

(72) Erfinder: Babel, Werner
Achweg 19
D-8962 Pfronten-Meilingen(DE)

(74) Vertreter: Patentanwälte Beetz sen. - Beetz jun. Timpe - Siegfried - Schmitt-Fumian
Steinsdorfstrasse 10
D-8000 München 22(DE)

(54) **Werkzeugmaschine zur Fräs- und Drehbearbeitung.**

(57) Gegenstand der Erfindung ist eine Werkzeugmaschine zur Fräs-, Bohr-und Drehbearbeitung von Werkstücken, bestehend aus einem Ständer (1) mit längsverschiebbarem Spindelstock (2) und aus einem Vertikal-Fräskopf (5) sowie aus einem horizontal und vertikal verfahrbaren Werkstück-Drehtisch (10), dessen Tischplatte (12) von einem Fräs-Antrieb (I) mit vorgespanntem Getriebe über einen Zahnkranz angetrieben wird. Um eine Vielzahl von unterschiedlichen Drehbearbeitungen mit der ausreichenden Genauigkeit und ohne schädliche Auswirkungen auf die Werkzeugmaschine in einer Werkstück-Aufspannung ausführen zu können, ist ein gesonderter Dreh-Antrieb (II) mit Getriebe für den Tisch (10) zur Dreh-Bearbeitung der Werkstücke vorgesehen. Während der Dreh-Bearbeitung ist das mit vorwählbarer Vorspannung ausgebildete Getriebe des Fräs-Antriebs (I) durch eine Kupplung abgeschaltet. Zur Aufnahme der Spankräfte bei der Drehbewegung ist die Spindel in ihrem Spindelkopf lageorientiert und durch eine besondere Klemmeinrichtung unter Entlastung der Spindellager fixiert.

Fig. 2

0 198 223

## Werkzeugmaschine zur Fräs-und Drehbearbeitung

Die Erfindung betrifft eine Werkzeugmaschine zur Fräs-, Bohr-und Drehbearbeitung von Werkstücken, bestehend aus einem Ständer mit längerverschiebbarem Spindelstock mit Horizontal- und Vertikalspindel sowie aus einem horizontal und vertikal verfahrbaren Werkstück-Drehtisch, dessen Tischplatte von einem Antrieb mit vorspannbarem Getriebe über einen Zahnkranz angetrieben wird.

Universal-Fräsmaschinen ebenso wie Fräs-und Bohr-Zentren zeichnen sich gegenüber entsprechenden Einfach-Maschinen dadurch aus, daß eine Vielzahl von verschiedenen Bearbeitungsvorgängen hintereinander fortlaufend vorgenommen werden können, ohne daß das Werkstück umgespannt werden müßte. Bei entsprechend programmierter Steuerung laufen diese verschiedenen Bearbeitungsvorgänge inklusive der Werkzeugwechsel und weiterer Zusatzoperationen automatisch ab, wobei in einer Aufspannung auch komplizierteste Werkstücke mit geringen Rüstzeiten bearbeitet werden können. Die Anzahl der verschiedenartigen Bearbeitungsgmöglichkeiten kann durch den Anbau von entsprechenden Zusatzeinrichtungen, wie z. B. Teilapparaten, schwenkbar am Spindelstock angeordneten Fräsköpfen usw., erheblich erweitert werden.

Bisher gab es jedoch keine Fräsmachinen, mit denen einerseits Fräs-und Bohr-Arbeiten sowie andererseits Dreh-Arbeiten an Werkstücken in einer einzigen Aufspannung durchgeführt werden konnten. Zwar existieren bereits Dreh-Maschinen, die durch Vorsehen von drehangetriebenen Werkzeugspindeln gewisse Fräs-und Bohrarbeiten an einem in der für Dreh-Maschinen typischen Weise aufgespannten Werkstück ermöglichen. Diese Werkzeugspindeln stellen jedoch lediglich Zusatz-Aggregate für die Dreh-Maschinen dar und erlauben die Ausführung nur einer begrenzten Anzahl an Bearbeitungsvorgängen mit geringen Spanleistungen. Der Grund für das Fehlen einer Werkzeugmaschine, die gleichwertig Fräs-und Dreharbeiten ausführen kann, liegt in den konträren Bedingungen für Fräs-und Dreh-Arbeiten. Die Voraussetzungen für das Antriebskonzept bei der Fräsbearbeitung von Werkstücken sind ein konstantes Drehmoment des Rundtisch-Antriebes bei relativ geringen Drehzahlen von z. B. 0,003 bis 11 Upm des Drehtisches, ein Regelbereich 1 : 4000 des Antriebszuges, ein vorgespannter, spielfreier Getriebezug mit der Möglichkeit einer Drehrichtungsumkehr und eine steife Axial-Radial-Lagerung mit Dämpfungswirkung des Rundtisches. Da die Spankräfte in erster Line vom umlaufenden Fräswerkzeug ausgeübt werden, kommt dessen Halterung in der Spindel und dem Drehantrieb der Frässpindel eine besondere Bedeu tung zu.

Demgegenüber stehen bei Werkzeugmaschinen für die Drehbearbeitung andere Kriterien im Vordergrund, und zwar eine konstante Antriebsleistung, ein Drehzahlbereich des Werkstück-Tisches von z. B. 10 bis mindestens 1000 Upm, ein Regelbereich des Antriebes von 1 : 100 und ein möglichst reibungsarmer Tisch-Antrieb vorzugsweise in nur einer Drehrichtung ohne Fixiervorrichtungen für den Werkstück-Tisch. Die Werkstücke sollen möglichst in Dreibackenfutter eingespannt werden und die stehende Werkzeugspindel soll eine Drehmoment-Abstützung für das Drehwerkzeug haben.

Aufgabe der Erfindung ist es, eine Werkzeugmaschine zu schaffen, auf der Fräs-und Bohrarbeiten ebenso wie eine Viehlzahl von verschiedenen Dreharbeiten mit der notwendigen Bearbeitungsgenauigkeit, hoher Spanleistung und ohne schädliche Einwirkungen auf die Einzelteile der Werkzeugmaschine durchgeführt werden können, ohne daß das Werkstück umgespannt werden müßte.

Diese Aufgabe wird erfindungsgemäß durch die kennzeichnenden Merkmale des Patentanspruchs 1 gelöst.

Das erfindungsgemäße technische Konzept vereinigt die an sich konträren Bedingungen durch die gesonderten Getriebe des Drehtisches für Fräs-und für Dreh-Arbeiten und durch Vorsehen einer Kupplung in mindestens einem dieser beiden Antriebszüge und einer axialen Dämpfung durch beispielsweise Verdrehen von keilförmigen Auflageringen, die bei der Fräs-Bearbeitung wirksam und bei der Dreh-Bearbeitung außer Funktion ist: Um die bekannt schädlichen Stillstands-Erschütterungen der fixierten Frässpindel bei der Dreh-Bearbeitung zu vermeiden, wird die Lagerung der Frässpindel während dieser Dreharbeiten erfindungsgemäß durch eine Fixiereinrichtung entlastet.

Zur Entlastung der fixierten Frässpindel bei Dreharbeiten wurde eine Klemmung entwickelt, bei welcher von einem elektromechanischen Drehantrieb ein Spiralring so lange verdreht wird, bis die durch die Spirale bewegten Spannbacken die Spindel genau zentrisch und selbsthemmend im Spindelstock klemmen.

Durch Verwendung des gesonderten Dreh-Getriebes werden die für eine Dreh-Bearbeitung notwendigen hohen Drehzahlen ermöglicht, und zwar bei stillgesetztem Fräs-Getriebe durch Ausrücken seiner Kupplung, was die gesamte Reibung und damit die Wärmeentwicklung im Rundtisch herabsetzt.

Die beiden Getriebe können an einen gemeinsamen Antriebsmotor angeschlossen werden oder auch je einem gesonderten Antriebsmotor zugeordnet sein. Im ersteren Fall muß der Motor in weiten Drehzahl-Grenzen geregelt werden können und - zumindest in seinen unteren Drehzahlbereichen - ein möglichst konstantes Drehmoment liefern, da dies zur Durchführung der Fräsarbeiten erwünscht bzw. notwendig ist. Zur Eingrenzung der Drehzahlbereiche eines einzigen Antriebsmotors sind die Getriebe als Schaltgetriebe -ggf. stufenlos - schaltbar -auszulegen. Je nach Motor-Typ können beide Getriebe als Untersetzungsgetriebe ausgelegt sein oder das im Fräsbetrieb aktive Getriebe ist ein Untersetzungsgetriebe und das Getriebe für die Dreharbeiten ist als Übersetzungsgetriebe ausgelegt.

Eine konstruktiv zweckmäßige Ausgestaltung der Erfindung zeichnet sich dadurch aus, daß die Kupplung die beiden im Fräsbetrieb gemeinsam mit dem Zahnkranz des Drehtisches kämmenden Treibritzel des vorgespannten Fräsgetriebes gleichzeitig ein-und ausrückt, was zweckmäßig durch eine hydraulisch Kolben-Zylinder-Einheit erfolgt, deren Kolbenstange über einen Mitnehmer an den beiden Wellen der mit dem Zahnkranz kuppelbaren Treibritzel angreift. Hierdurch ergibt sich die vorteilhafte Möglichkeit, zur Fräsbearbeitung die Vorspannung des Fräs-Antriebes mittels einer z. B. hydraulisch betätigbaren Vorspanneinheit einstellen zu können.

Bei der Werkzeugmaschine gemäß der Erfindung ist die Lagerung des Drehtisches von besonderer Bedeutung, da sie die konträren Anforderungen bei Fräsarbeiten und bei der Drehbearbeitung erfüllen muß. Bei den Fräsarbeiten stehen die Aufnahme von hohen Drehmomenten und häufige jedoch langsame Drehbewegungen des Tisches im Vordergrund. Im eine spielfreie Lagerung mit dem angestrebt hohen Dämpfungseffekt zu erzielen, ist der Drehtisch erfindungsgemäß in wahlweise vorspannbaren Axial-Radial-Lagern gelagert, die zweckmäßig mit axialem Zwischenabstand an einem zentralen zylindrischen Ansatz an der Tischunterseite angeordnet sind. Zur Ausführung von Dreharbeiten ist dagegen wegen der hohen Drehzahlen eine möglichst reibungsarme Tischlagerung notwendig. Gemäß der Erfindung wird diese reibungsarme Lagerung des Drehtisches bei Dreharbeiten durch Druckmittel-Lager erreicht. Nach Abbau der z. B. hydraulisch erzeugten Vorspannung der Axial-Radial-Lager wird der Drehtisch entlastet. Zwischen der horizontalen festen Tragfläche und der Tischunterfläche bildet sich ein Spalt.

Bei Fräsarbeiten wird durch Erhöhung der Lager-Vorspannung der Spalt verkleinert, so daß Mischreibung mit guter Dämpfwirkung erzielt wird.

Speziell für die Durchführung von Dreharbeiten empfiehlt es sich, eine ortsfeste Trägerkonstruktion oberhalb des auf dem Rundtisch aufgespannten Werkstücks vorzusehen, die in der Mittelachse der Tischplatte eine drehbar gelagerte Körnerspitze aufweist und eine sichere Zentrierung des Werkstückes auf dem Rundtisch in der Drehachse ermöglicht.

Im folgenden werden bevorzugte Ausführungsbeispiele der Erfindung anhand der Zeichnung im einzelnen beschrieben. Es zeigen:

Fig. 1 schematisch eine erfindungsgemäße Werkzeugmaschine zum Fräsen und Drehen in Seitenansicht;

Fig. 2 schematisch einen Drehtisch mit je einem gesonderten Fräsantrieb und einem Drehantrieb;

Fig. 3 schematisch einen Drehtisch mit zwei Getrieben und nur einem Antriebsmotor;

Fig. 4 ein Vorspannschema des Fräsgetriebes;

Fig. 5 schematisch eine andere Vorspannmöglichkeit, bei welcher die Getriebe I und II zusammenwirken;

Fig. 6 bis Fig. 8 verschiedene Ausführungen der Spindelklemmung im Axialschnitt;

Fig. 9 schematisch zwei Möglichkeiten der Tischlagerung.

Die erfindungsgemäß für alle Dreharbeiten geeignete Universal-Fräs-und Bohrmaschine enthält einen Ständer 1, auf dessen Oberseite ein Spindelstock 2 mit einer Horizontalspindel 3 und einer Vertikalspindel 4 längsverschiebbar angeordnet ist. Die Vertikalspindel 4 befindet sich in einem vertikalen Fräskopf 5, der an der einen Stirnseite eines Schwenkkopfs 6 verdrehbar befestigt ist. Dieser Schwenkkopf 6 kann durch eine Schwenkbewegung um eine strichpunktiert eingezeichnete 45°-Achse aus seiner dargestellten Betriebsposition in eine Außerbetriebslage oberhalb des Spindelstockes bewegt werden, wenn mit der Horizontalspindel 3 gearbeitet wird. Der vertikale Fräskopf 5 kann jedoch auch auf andere Weise an der Stirnseite des Spin delstocks 2 befestigt sein. Dieser Spindelstock 2 trägt einen Antriebsmotor 7 und ist in Horizontalführungen 8 am Ständer I geführt. An der Vorderseite des Ständers 1 ist eine Konsole 9 in Vertikalführungen höhenverstellbar befestigt, an welcher ein Werkstücktisch 10 mit einer Tischplatte 12 befestigt ist. In diesen Werkstücktisch 10 sind die beiden im folgenden ausführlich erläuterten Antriebe I für Fräsarbeitein und II für Dreharbeiten integriert.

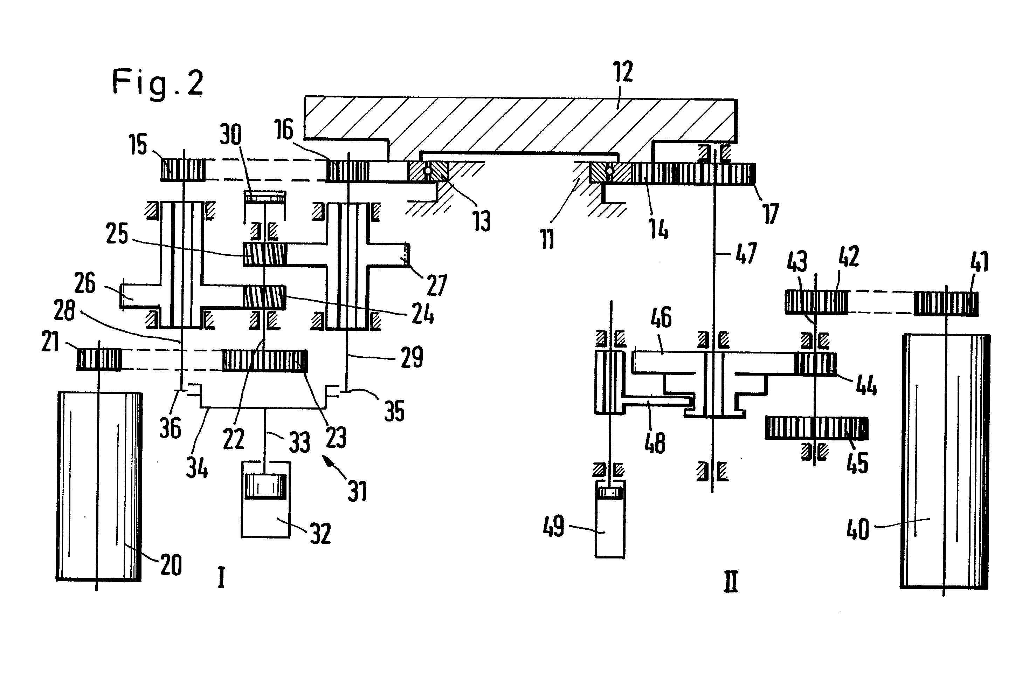

Wie aus Fig. 2 ersichtlich, ist auf einem Sockel 11 des Rundtisches 10 eine Tischplatte 12 in einem Lager 13 drehbar gelagert. An der Unterseite der Tischplatte 12 und am Lager 13 ist ein Zahnkranz 14 befestigt, mit dem im dargestellten Betriebszustand zwei Treibritzel 15, 16 des Fräs-Antriebes I und ein Treibrad 17 des Dreh-Antriebs II kämmen.

Der Fräs-Antrieb I umfaßt einen stufenlos regelbaren Elektromotor 20, dessen Abtriebsrad 21 ein am Ende einer Hilfswelle 22 sitzendes Zahnrad 23 triebt. Auf dieser Hilfswelle 22 sind zwei Zahnräder 24, 25 mit Schrägverzahnung befestigt, die mit schräggezahnten Rädern 26, 27 in Eingriff stehen. Diese beiden Zahnräder 26, 27 treiben über zwei Wellen 28, 29 die beiden Treibritzel 15, 16 synchron an. Zum Erhalt einer einstellbaren Vorspannung im Getriebe des Fräs-Antriebes I wirkt auf die Hilfswelle 22 eine axiale Kraft in Richtung des Pfeiles, und zwar über eine hydraulische Kolben-Zylinder-Einheit 30, die am oberen Ende der Hilfswelle 22 angreift. Aufgrund der Schrägverzahnung der Radpaare 24, 26 und 25, 27 führt diese axiale Kraft zu einer ständigen Druckanlage der Zahnflanken, wobei durch eine geringfügige relative Verdrehung der beiden Ritzel 15, 16 das Zahnspiel im gesamten Getriebe des Fräs-Antriebes I kompensiert und eine vorwählbare Vorspannung von an die jeweiligen Belastungen angepaßter Größe erzielt werden kann.

Bei der Drehbearbeitung eines auf der Tischplatte 12 aufgespannten -nicht dargestellten - Werkstückes wird mit um ein Mehrfaches höheren Drehzahlen gearbeitet. Der für nur geringe Drehzahlen ausgelegte Fräs-Antrieb ist abgeschaltet, was mit Hilfe einer Schaltkupplung 31 erfolgt, die als Betätigungsorgan eine hydraulische Kolben-Zylinder-Einheit 32 enthält, deren Kolbenstange 33 mit einem Schaltorgan 34 verbunden ist, das an Mitnehmern 35, 36 der beiden Wellen 28, 29 angreift. Durch Betätigen der Kolben-Zylinder-Einheit 32 werden die beiden Treibritzel 15, 16 aus dem Zahnkranz 14 des Drehtisches 10 ausgerückt, so daß dieser frei drehen kann (nach vorherigem Abbau der Vorspannung).

Der Dreh-Antrieb II enthält einen für höhere Drehzahlen ausgelegten stufenlos regelbaren Elektromotor 40, dessen Abtriebsrad 41 ein Zahnrad 42 direkt oder über ein Übertragungselement, wie einen Zahnriemen oder eine Kette, antreibt. Auf der Welle 43 dieses Zahnrads 42 sitzen mit Zwischenabstand zwei Übersetzungs-Zahnräder 44, 45, die mit einem Schaltrad-Satz 46 wechselweise in Eingriff gebracht werden können. Dieser Schaltrad-Satz 46 ist drehfest und axial verschiebbar auf der Welle 47 des Zahnrades 17 gelagert. Als Betätigungsglied für einen am Schaltrad-Saltz 46 angreifenden Schaltfinger 48 dient eine hydraulische Kolben-Zylinder-Einheit 49, auf deren Kolbenstange der Schaltmitnehmer 48 befestigt ist. Mit Hilfe dieser Kolben-Zylinder-Einheit 49 kann das Getriebe des Dreh Antriebes II in zwei Stufen und in Leerlauf geschaltet werden.

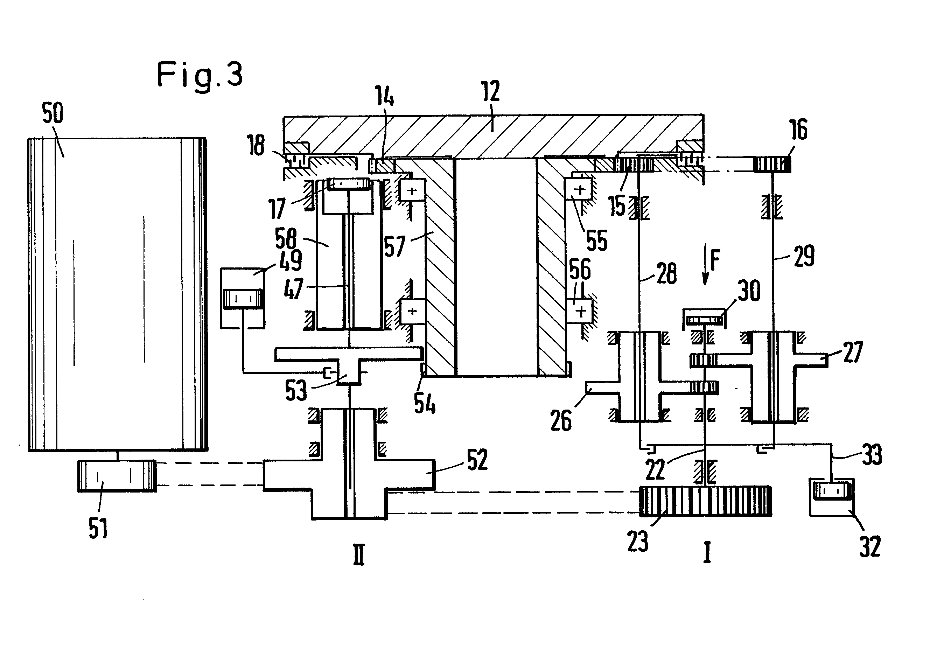

Die in Fig. 3 dargestellte Ausführung hat eine Vielzahl von Bauteilen mit derjenigen der Fig. 2 gemeinsam, die dementsprechend auch mit den gleichen Bezugszeichen bezeichnet sind. Der wesentliche Unterschied liegt in der Verwendung nur eines einzigen -entsprechend dimensionierten - Antriebsmotors 50, dessen Treibrad 51 direkt oder über Übertragungsmittel ein Eingangsrad 52 des Dreh-Antriebes II und/oder das Zahnrad 23 des Fräs-Antriebes I antreibt. Das Fräs-Getriebe I entspricht in seinem konstruktiven Aufbau dem in Fig. 2 dargestellten. Das Dreh-Getriebe II gemäß Fig. 3 besteht, aus den Zahnrädern 17 und 53, die mit Zwischenabstand auf der Welle 47 befestigt sind. Welle 47 ist drehfest mit Eingangsrad 52 verbunden und axial verschiebbar. Mittels Kolbenzylinder-Einheit 49 werden die Zahnräder 17 und 53 wechselweise mit den Zahnrädern 14 und 54 in Eingriff gebracht bzw. in die Leerlauf-Stellung geschaltet.

An der Unterseite der Tischplatte 12 ist ein hohlzylindrischer Ansatz 57 mittig befestigt, der in zwei axial beabstandeten Axial-Radial-Lagern 55, 56 läuft. Durch geeignete Maßnahmen können diese beiden Lager 55, 56 bei Bedarf, z. B. durch Einleiten von Druckflüssigkeit, vorgespannt werden, was zur Durchführung von Fräs-und Bohrarbeiten zweckmäßig ist. Durch Vorspannen der Lager 55, 56 wird die Steifigkeit wesentlich erhöht und die Tischplatte 12 wird nach unten gezogen, so daß beim Fräsern eine Gleitauflage entsteht. Durch Zurücknahme der Vorspannung wird die Gleitfläche am Drehtisch freigestellt, was ein ausreichendes Spiel zwischen der Tischplatte 12 und den ortsfesten Gehäuseteilen gewährleistet. Bei der Drehbearbeitung bildet sich in diesem Spalt ein hydrodynamischer Schmierfilm aus. In ein Labyrinth, am Außendurchmesser der Tischplatte 12, wird Sperrluft gegen das Eindringen von Spänen und anderen Verunreinigungen eingeblasen. Diese Lagerung ermöglicht Tisch-Drehzahlen von über 2500 Upm, die allen Drehbearbeitungsarten genügen.

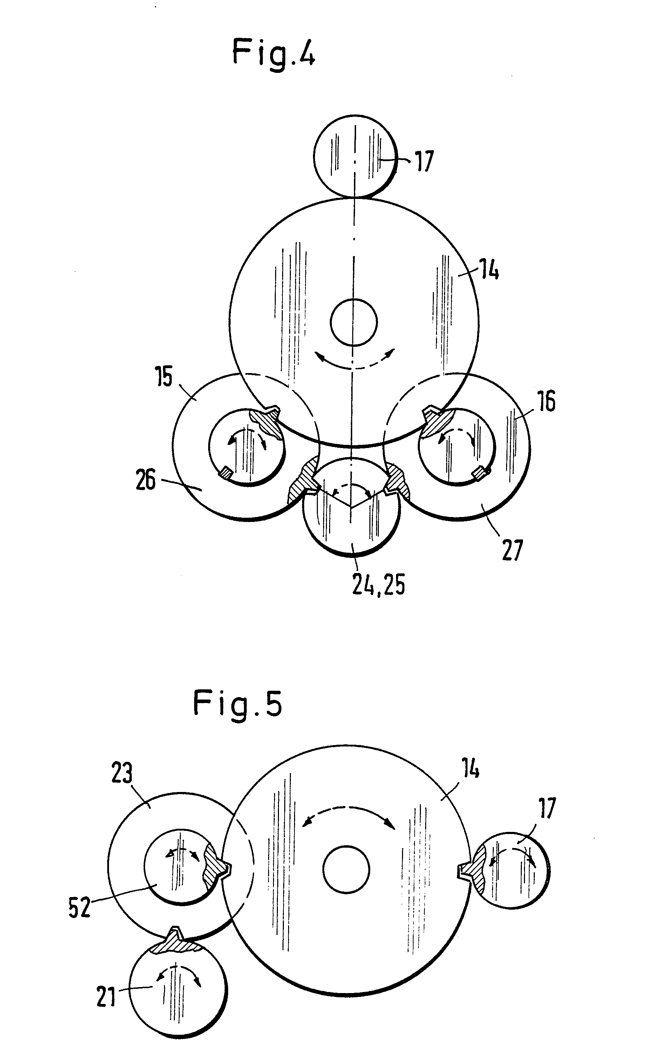

Fig. 4 zeigt schematisch den Erhalt einer Vorspannung im Getriebe des Fräs-Antriebs I bei den in Fig. 2 und 3 dargestellten Ausführungen. Die beiden Zahnräder 24, 25 sind auf der Welle 22 geringfügig so gegeneinander winkelversetzt angeordnet, daß eine vorbestimmte Druckanlage der Zahnflanken zustandekommt, durch welche das normale Zahnspiel kompensiert wird. Dieser Druck wird von der Kolben-Zylinder-Einheit 30 erzeugt und kann aufgehoben werden, bevor die Kupplung 31 zum Ein-oder Ausschalten dieses Getriebes betätigt wird.

In Fig. 5 ist eine konstruktiv einfachere Möglichkeit zur Erzielung der Vorspannung im Getriebe des Fräs-Antriebes I dargestellt, und zwar ohne die Hilfswelle 22 mit den Zahnradpaaren 24, 26 und 25, 27 der in Fig. 2 dargestellten Ausführung. Die Vorspannung des Fräs-Antriebs I wird dadurch erreicht, daß das Getriebe des Dreh-Antriebs II ständig, d. h. auch während der Fräsbearbeitung, abgebremst mitläuft und dadurch eine ständige Druckanlage der in Eingriff befindlichen Zahnflanken unter Kompensation des Zahnspiels bewirkt. Lediglich während eines Wechsels der Drehrichtung ist diese Vorspannung unwirksam.

Die zu bearbeitenden Werkstücke werden ggf. zusammen mit ihren Paletten auf der Tischplatte in der für die Fräsbearbeitung üblichen Weise mittig aufgespannt. Soll von der Fräsbearbeitung zur Drehbearbeitung übergegangen werden, muß lediglich der Fräs-Antrieb I ausgekuppelt und der Dreh-Antrieb II eingeschaltet werden, der dann die Tischplatte mit der eingestellten Drehgeschwindigkeit antreibt. Nach Erreichen der Solldrehzahl kann das in die Spindel eingesetzte Abdrehwerkzeug durch Verfahren des Spindelstockes in die Arbeitsposition zugestellt werden. Dabei besteht auch die vorteilhafte Möglichkeit, mit drehangetriebenem Werkzeug zu arbeiten, ohne daß zusätzliche Aggregate notwendig wären. Alle Bearbeitungs-und Schaltvorgänge können entsprechend dem jeweiligen Steuerprogramm automatisch ablaufen. Um für Dreharbeiten die Zentrierung eines Werkstückes auf dem Rundtisch zu verbessern, kann eine nicht dargestellte Tragkonstruktion vorgesehen sein, die die Linearbewegungen des Rundtisches mitmacht und die in einem Querhaupt in der Tischachse eine Körnerspitze aufweist.

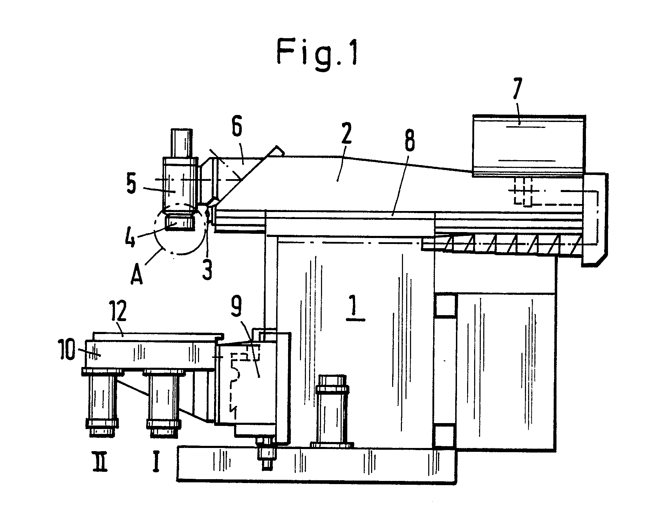

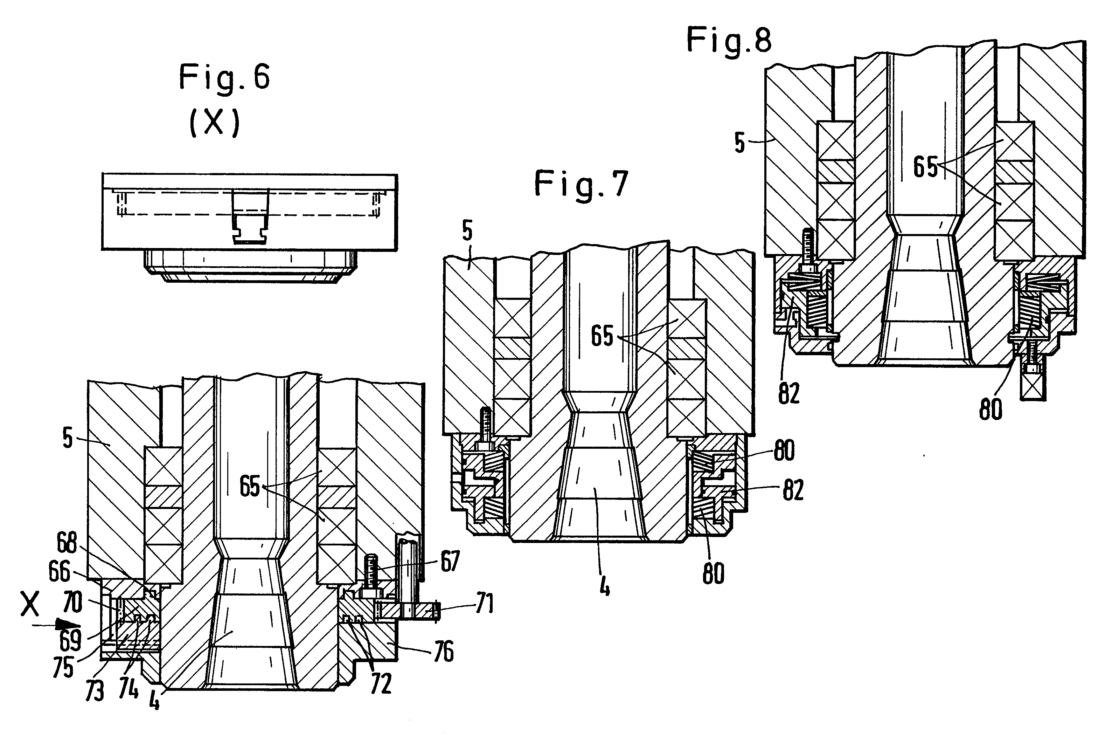

Die Fig. 6 bis 8 zeigen verschiedene Ausführungen von Fixiervorrichtungen zum sicheren Festlegen der Spindel in einer vorgegebenen Winkelstellung (Ausschnitt A in Fig. 1) wobei im oberen Teil der Fig. 6 noch die Ansicht X der in ihrem unteren Teil im Axialschnitt dargestellten Ausführung gezeigt ist. Die Spindeln 3 und 4 ermöglichen eine Aufnahme des Drehwerkzeuges mit Lageorientierung, Drehmomentstütze und Werkzeugspannung. Die wesentlichen Spindelteile sind identisch mit der Steilkegelaufnahme der Fräswerkzeuge, damit die Dreh-und die Fräswerkzeuge mit demselben Greifer gewechselt werden können. Zu diesem Zwecke ist an jedem - nicht dargestellten -Drehwerkzeug ein Werkzeugbund wie bei den Fräswerkzeugen vorgesehen. Der vordere Endteil der Spindel ist in herkömmlicher Weiser in kräftigen Lagern 65 im Fräskopf 5 gelagert. An der Stirnseite des Fräskopfes ist bei der Ausführung nach Fig. 6 eine Ringscheibe 66 durch Schrauben 67 mit versenktem Kopf befestigt. In der Stirnseite dieser Ringscheibe 66 ist eine Ringnut 68 von rechteckigem Querschnitt eingearbeitet, in die ein ringförmiger Ansatz an der benachbarten Stirnfläche einges Spiralrings 69 eingreift. Dieser Spiralring 69 hat einen kleineren Durchmesser als die Ringscheibe 66 und trägt an seinem Außenumgang eine Verzahnung 70, in die ein Ritzel 71 ein greift, dessen Welle achsparallel zur Spindel gelagert ist und von einem elektromechanischen Antriebsmotor angetrieben wird. In der anderen Stirnfläche des Spiralringes 69 sind Spiralnuten 72 von rechteckigem Querschnitt angeordnet. Mehrere über dem Umfang versetzt angeordnete Spannbacken 73 -in Fig. 6 ist nur eine Klemmbacke dargestellt -weisen an ihrer einen Stirnfläche Ansätze 74 von rechteckigem Querschnitt auf, die in die Spiralnuten 72 des Spiralrings 69 eingreifen. Die Klemmbacken 73 sind gegenüber dem verbreiterten Endabschnitt der Spindel 4 radial verschiebbar und in Ausnehmungen 75 geführt, die in einem mit der Ringscheibe 66 z. B. durch Schrauben fest verbundenen Ringkörper 76 vorgesehen sind.

Durch eine Drehbewegung des Ritzels 71 wird der mit diesem in Eingriff stehende Spiralring 69 mit entsprechender Untersetzung verdreht. Aufgrund des Eingriffes der Backen 73 in die spiralförmig verlaufenden Ausnehmungen 72 des Spiralringes 69 wird diese Drehbewegung des Spiralrings 69 in eine radiale Zustellbewegung der Klemmbacken 73 umgesetzt, die dadurch fest gegen die äußere Umfangsfläche des verbreiterten Endteils der Spindel 4 angedrückt werden. Aufgrund der radialen formschlüssigen Führung der Klemmbacken 73 in dem über die Ringscheibe 66 mit dem Spindelkopf 5 fest verbundenen Ringkörper 76 werden die bei Dreharbeiten vom Werkzeug auf die Spindel 4 ausgeübten Kräfte und Momente direkt in das Gehäuse des Fräskopfes 5 eingeleitet, und zwar ohne Einwirkung auf die Wälzlager 65 der Spindel.

Bei den Ausführungen nach Fig. 7 und 8 erfolgt die Klemmung der lageorientierten Horizontalspindel 3 bzw. der Vertikalspindel 4 im Gehäuse des Fräskopfes 5 durch hydraulisch beaufschlagte Ringfedern 80. Während der Fräsarbeiten ist die Wirkung dieser Federn durch Rückfederung aufgehoben. Die Fixiereinrichtung nach Fig. 6 ist unter Berücksichtigung von Wärmedehnungen der Spindel und der weiteren Bauteile besonders zweckmäßig. Es sind jedoch auch andere Fixiervorrichtungen möglich, die eine direkte Einleitung der bei Dreharbeiten auf das Werkzeug ausgeübten Kräfte in den Fräskopf bzw. den Spindelstock ermöglichen.

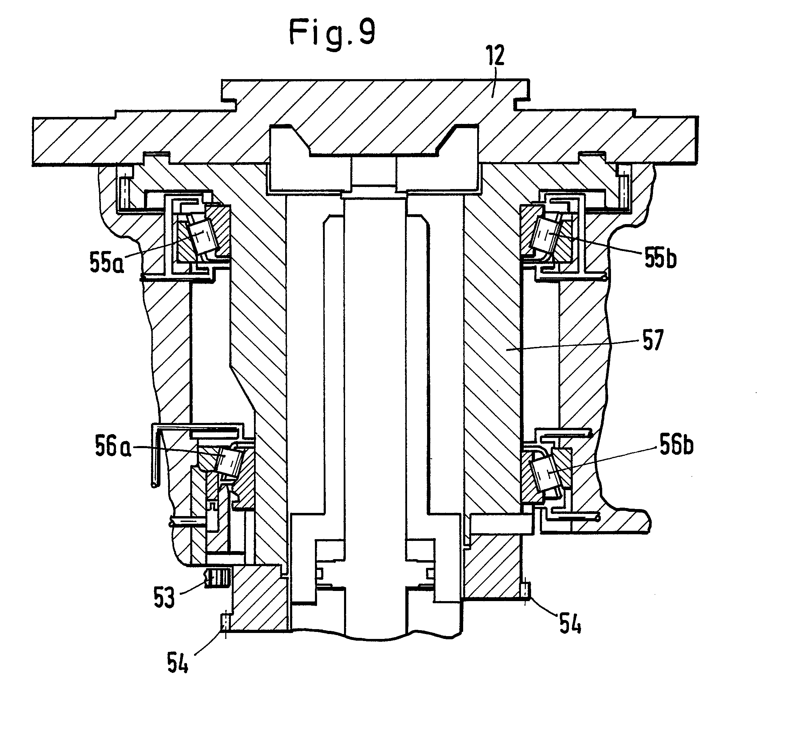

In Fig. 9 sind zwei Lagerungs-Ausführungen für den Drehtisch dargestellt, die jeweils an dem zentralen Hohlzylinder 57 mit axialem Zwischenabstand angreifen. Als oberes Lager 55a, b werden Kegelrollenlager mit Schmierölzufuhr eingesetszt. Als unteres Lager 56a, b kann zweckmäßig ein sog. Hydra-Rib-Lager eingebaut werden, dem zur Erzielung der gewünschten Vorspannung Drucköl über die eingezeichnete Druckleitung zugeführt werden kann.

**Ansprüche**

1. Werkzeugmaschine zur Fräs-und Drehbearbeitung von Werkstücken, bestehend

-aus einem Ständer mit längsverschiebbarem Spindelstock und Vertikal -sowie Horizontalspindel und

-aus einem Werkstück-Drehtisch, der auf einem Bett bzw. einer Konsole translatorisch verfahrbar und von einem Antrieb mit vorspannbarem Getriebe über einen Zahnkranz drehangetrieben ist,

**dadurch gekennzeichnet,**

daß der Antrieb für den Drehtisch (12) mindestens einen Antriebsmotor und zwei Getriebe (I, II) aufweist, die mit dem Drehtisch (12) und dem Antriebsmotor kuppelbar sind und von denen mindestens eines bei Bedarf vorgespannt werden kann.

2. Werkzeugmaschine nach Anspruch 1,

gekennzeichnet durch

eine Einrichtung zum Positionieren und Fixieren der Horizontal-bzw. Vertikalspindel (3. bzw. 4) in vorgegebenen Verdrehstellungen im Spindelstock -(2) mit Entlastung der Spindellagerung während der Drehbearbeitung, die eine am vorderen Spindelende angreifen de Klemmung enthält.

3. Werkzeugmaschine nach Anspruch 2,

dadurch gekennzeichnet,

daß die Klemmung für die Spindel (4) als Spiralringklemmung mit motorisch verdrehbarem Spiralring oder als hydromechanische Klemmung ausgeführt ist.

4. Werkzeugmaschine nach einem der Ansprüche 1 bis 3,

dadurch gekennzeichnet,

daß der Drehtisch (12) in wahlweise vorspannbaren Axial-Radial-Lagern (55, 56) im Konsolengehäuse und zumindest im Drehbetrieb bei entspannten Lagern (55, 56) auf mindestens einem Druckmittel-Lager gelagert ist.

5. Werkzeugmaschine nach Anspruch 4,

dadurch gekennzeichnet,

daß mindestens zwei vorzugsweise Axial-Radial-Lager (55, 56) an einem zentralen hohlzylinderischen unteren Ansatz (57) des Drehtisches in axialem Zwischenabstand angeordnet sind.

6. Werkzeugmaschine nach einem der vorhergehenden Ansprüche,

dadurch gekennzeichnet,

daß die Kupplung (31) des Fräs-Antriebs eine hydraulische Kolben-Zylinder-Einheit (32) enthält, an deren Kolbenstange ein Schaltorgan (34) befestigt ist, das an Mitnehmern (35, 36) der Wellen -(28, 29) von zwei Treibritzeln (15, 16) angreift, welche gleichzeitig mit einem an der Tischplatte -(12) befestigten Zahnkranz (14) kuppelbar sind.

7. Werkzeugmaschine nach einem der Ansprüche 1 bis 6,

dadurch gekennzeichnet,

daß im Getriebe des Fräs-Antriebs zwei Zahnradpaare (24, 26; 25, 27) mit entgegengesetzter Schrägverzahnung vorgesehen sind, die zum Erhalt einer gewünschten Vorspannung axial mit einer einstellbaren Kraft beaufschlagbar sind.

8. Werkzeugmaschine nach einem der vorhergehenden Ansprüche,

dadurch gekennzeichnet,

daß das Getriebe des Dreh-Antriebs ein hydraulisch geschaltetes Stufengetriebe mit Leerlauf ist.

9. Werkzeugmaschine nach Anspruch 1,

dadurch gekennzeichnet, daß das Getriebe des Fräs-Antriebs nur ein Abtriebszahnrad (42) aufweist und daß der Dreh-Antrieb zum Erhalt der notwendigen Vorspannung des Getriebe-Zuges bei Fräsarbeiten im Bremsbetrieb mitläuft.

10. Werkzeugmaschine nach einem der vorhergehenden Ansprüche,

gekennzeichnet durch

eine ortsfeste Trägerkonstruktion über dem Rundtisch, die in der Mittelachse der Tischplatte eine drehbar gelagerte Körnerspitze aufweist.

# Fig.1

Fig. 2

**Fig.3**

# Fig.4

# Fig.5

Fig.6
(X)

Fig.7

Fig.8

5

65

65

5

65

5

68
66
X
70
69
75
73 74 4
72
76
71
67

4

80

82

80

80

82

0 198 223

# Fig.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 205 446 (SCHIESS)<br>* Anspruch 1 * | 1 | B 23 Q 5/14<br>B 23 Q 5/38<br>B 23 Q 5/56 |
| Y | | 2-5,7-10 | |
| Y | DE-B-1 194 226 (BOHLE)<br>* Patentanspruch * | 2,3 | |
| Y | DE-C- 609 088 (SARDEMANN)<br>* Patentanspruch * | 3 | |
| Y | FR-A-1 011 954 (BERTHIEZ) | 4,5 | |
| Y | US-A-3 398 595 (CLUTTER)<br>* Anspruch 5 * | 7 | RECHERCHIERTE SACHGEBIETE (Int. Cl.4) |
| Y | GB-A-1 277 076 (PNEUMO)<br>* Anspruch 1 * | 8 | B 23 Q<br>B 23 B |
| Y | DE-A-1 527 126 (LIEBHERR)<br>* Anspruch 3 * | 9 | |
| Y | DE-A-2 512 901 (SKRYPZAK)<br>* Seite 4, Zeilen 6-11 * | 10 | |
| A | GB-A- 486 332 (WICKMAN)<br>-/- | 1 | |

Der vorliegende Recherchenbericht wurde für alle Patentansprüche erstellt.

| Recherchenort | Abschlußdatum der Recherche | Prüfer |
|---|---|---|
| DEN HAAG | 11-07-1986 | DE GUSSEM J.L. |

Europäisches
Patentamt

**EUROPÄISCHER RECHERCHENBERICHT**

Nummer der Anmeldung

EP 86 10 3361

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 877 322 (BENJAMIN) | 2,4,5 | |
| | --- | | |
| A | GB-A- 7 837 (WERNER)(A.D. 1912) | 6 | |
| | --- | | |
| A | US-A-4 167 962 (RHODES) | 6 | |
| | --- | | |
| A | DE-C- 567 000 (REINECKER). | 10 | |
| | ----- | | |

RECHERCHIERTE
SACHGEBIETE (Int. Cl.4)

Der vorliegende Recherchenbericht wurde für alle Patentansprüche erstellt.

| Recherchenort DEN HAAG | Abschlußdatum der Recherche 11-07-1986 | Prüfer DE GUSSEM J.L. |
|---|---|---|